# EUROPEAN PATENT APPLICATION

(11) **EP 2 728 398 A1**
(43) Date of publication of application: **07.05.2014**
(21) Application number: 13191231.3
(22) Date of filing: 01.11.2013
(51) Int. Cl.: G02B 27/09

(54) **Optical integrator rod with internal object plane**

(30) Priority: 02.11.2012 US 201213667454
(71) Applicant: Christie Digital Systems USA, Inc., Cypress, CA 90630 (US)
(72) Inventor: MacPherson, James, Kitchener, Ontario N2G 4Y7 (CA)
(74) Representative: Graham, Emma Louise

(57) **Abstract**

An improvement in DMD illumination systems is set forth, wherein the spatially integrated object plane is selected from within the volume of the integrating rod, rather than at its exit face. In one embodiment, the exit face of the rod may be curved to aid imaging. Benefits of the integrator rod according to the present invention include reduced sensitivity to dust, edge chips and surface defects, simpler or more rugged mounting.

## Description

### BACKGROUND OF THE INVENTION

### 1. Field of the Invention

The present invention relates in general to projection systems, and more particularly to an optical integrator rod having an illumination object plane within the volume of optical integrator rod rather than at its exit surface.

### 2. Description of the Related Art

Optical integrator rods are well known components used in illumination systems for electronic projectors. An integrator rod is a hollow or solid internally reflective "light pipe" that uses multiple reflections of a focused light source, such as a lamp, to obtain homogenization of round or irregular patterns of source illumination and convert them into a uniform rectangular spatial light distribution. There are two common types of reflective integrator, a hollow "tunnel" type made of four inward-facing mirrors and a "solid" type consisting of solid glass in a rectangular rod shape, where two opposing facets act as input and exit apertures and the remaining four facets act as internal reflectors. Current designs of "tunnel" type light pipes cannot pass as high a light intensity as a solid rod, require more difficult coating and assembly, and can introduce their own unique image artifacts such as seam images. The solid rod integrator is more efficient than the tunnel type since it works on lossless multiple reflections using TIR (the Total Internal Reflection) of the glass rod.

The rod exit surface serves as an object plane for a relay lens system, which reproduces the spatial distribution of light at the exit surface onto an imaging panel such as an LCD (Liquid Crystal Display) or DMD (Digital Micromirror Device). The modulated light from the imaging panel is then projected onto a screen. In a well designed system, the integrator rod image has high uniformity and a size and shape that conform strictly to the active area of the imaging panel for maximum illumination efficiency.

Although conventional integrator rods are in the shape of a rectangular parallelepiped, tapered integrator rods are known where the taper along the length of the rod is symmetric on two or four sides or, as set forth in U.S. Patent No. 6,205,271 (Bowron et al) tapered only on one side.

Another prior art integrator rod is set forth in U.S. Publication No. 2006/0044531 (Potekev). The integrator body has a consistent cross-sectional area that extends from an entry aperture with a first geometric shape to an exit aperture with a different second geometric shape, in order to increase the light that is captured from the light source and directed into the integrator.

According to prior art integrator rod designs, as set forth above, any irregularities at the rod exit surface are imaged to the DMD and thence to the screen. Thus, dust and glass chips at the exit surface are known to cause image artifacts. Although chip artifacts can be avoided by careful handling of the integrators, and dust blemishes can be avoided somewhat by maintaining clean-room conditions over all stages of assembly, these precautions are difficult and expensive to implement, and have enjoyed limited success. Likewise, sealed systems have had only a limited success rate in the field, and often interfere with assembly, cleaning or repair.

### SUMMARY OF THE INVENTION

It is an aspect of the present invention to provide an integrator rod with an internal or 'buried' object plane, by extending the volume of the rod immediately beyond its usual exit surface. In one embodiment, the rod extension is provided by adding a volume of glass to the optical path immediately beyond the exit surface of the integrator rod, at the object plane. By disposing the object plane inside the volume of glass, rather than at the exit surface of the integrator rod, adverse effects on image quality caused by surface dust and defects (e.g. chipping) in the integrator rod are reduced. The problem of dust on the object plane is eliminated because the object plane is not exposed and any defects or dust on the exit surface are out of focus at the DMD plane(s). The cross-sectional shape of the rod beyond the object plane (i.e. in the glass volume) is unimportant, so long as its size is sufficient to pass all rays of light having a useful F-number.

Burying the object plane within the volume of the integrator rod also improves optical efficiency because the illumination object is essentially disposed in a medium of higher refractive index than at the exit face, thereby also increasing the effective collection angle of the relay system.

Extending the volume of the integrator rod beyond the optical object plane also allows for simpler or more effective mechanical mounting of the integrator rod assembly since clips, adhesives or other retaining features can be applied without blocking the light or breaking the total internal reflection of the side facets.

In one embodiment, the volume of the rod is extended beyond the object plane by adding a lens or slab of glass at the end of the integrator rod, while in other embodiments the integrator rod and glass volume are manufactured out of a single piece of glass.

These together with other aspects and advantages which will be subsequently apparent, reside in the details of construction and operation as more fully hereinafter described and claimed, reference being had to the accompanying drawings forming a part hereof, wherein like numerals refer to like parts throughout.

### BRIEF DESCRIPTION OF THE SOLE DRAWINGS

Figure 1 is a schematic representation of a conventional color digital projector.

Figure 2A is a schematic representation of a conventional optical integrator rod where the object plane and exit surface are coincident, and FIG. 2B shows how reflections in side walls of the integrator rod prevent point-to-point imaging of planes within the rod.

FIG. 3 is a schematic representation of an optical integrator rod with an extension of the exit face beyond the object plane, according to an embodiment of the invention.

FIGS. 4A - 4F are schematic representations of optical integrator rods according to alternative embodiments of the invention.

FIG. 5A shows a conventional integrator rod separated from the first element of a conventional relay lens system and FIG. 5B shows a combined integrator rod and first optical element according to a further alternative embodiment.

FIG. 6A shows a baseline image produced by a projector, where a test obstruction has been placed at the coincident object plane and exit surface of a conventional integrator rod, and FIG. 6B shows the image produced when the same test obstruction is placed on the exit surface of an integrator rod according to the present invention, with a 4mm separation between the object plane and exit surface.

### DETAILED DESCRIPTION OF THE PREFERRED EMBODIMENTS

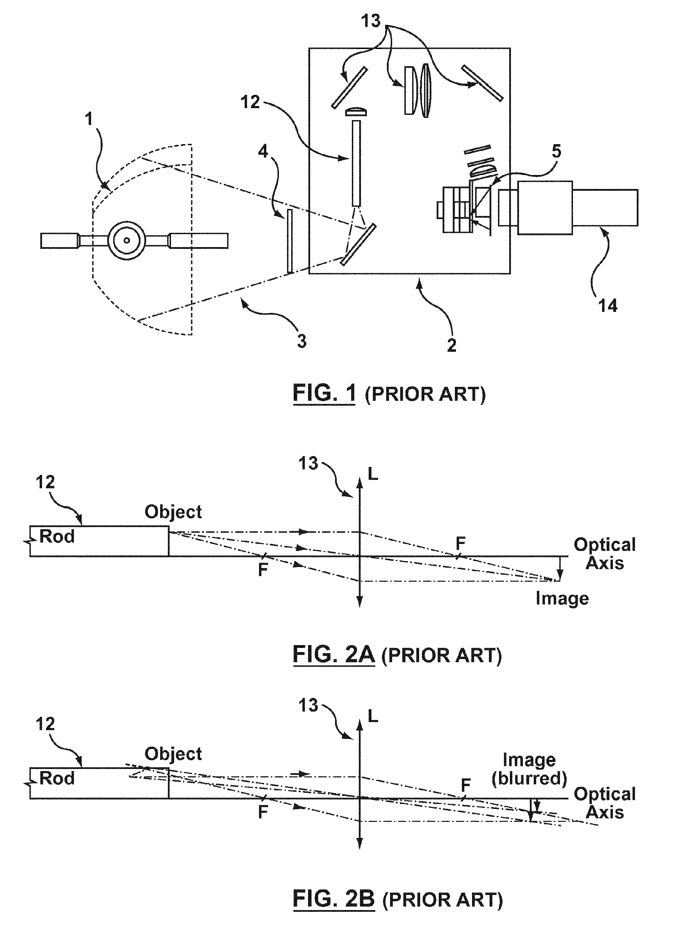

FIG. 1 shows a typical projector comprising a Xenon lamp and elliptical reflector 1 for creating a light cone 3 that passes through a UV filter 4 into an illumination system 2. The lamp is located at a first focal point of the reflector 1, so that light cone 3 comes to a focus co-incident with an integrator rod 12. As discussed above, the integrator rod converts the circular illumination pattern output from the lamp and received on an input face of the rod 12 to a uniform rectangular pattern at the exit face. The rectangular light beam at the exit surface of integrator rod 12 is imaged onto a light engine 5 by a relay lens system 13, and then projected by a projection lens 14 onto a screen (not shown) to produce an image.

As discussed above, in conventional designs, the relay lens system 13 is optically configured to match the exit surface of the rod 12 and the imaging panel(s) of the light engine 5 as imaging conjugates, as shown in FIG. 2A. Other choices of object plane do not provide a sharply defined illumination area. For object planes chosen beyond the rod, rays are no longer confined to the rod cross section. For object planes chosen inside the rod, reflections in the walls create virtual object points outside the cross section, so that the light from a given object point cannot produce a single, sharp image point, as shown in FIG. 2B.

The inventor has discovered that if the rod geometry is changed so that reflections beyond the object plane are prevented, it is possible to use an object plane within the volume of the rod, thereby separating the object plane from the exit surface. Imaging a plane inside the rod is possible because glass is a weakly scattering medium, and a transmitted light distribution is imaged (rather than light being scattered off the outside surface of an illuminated physical object).

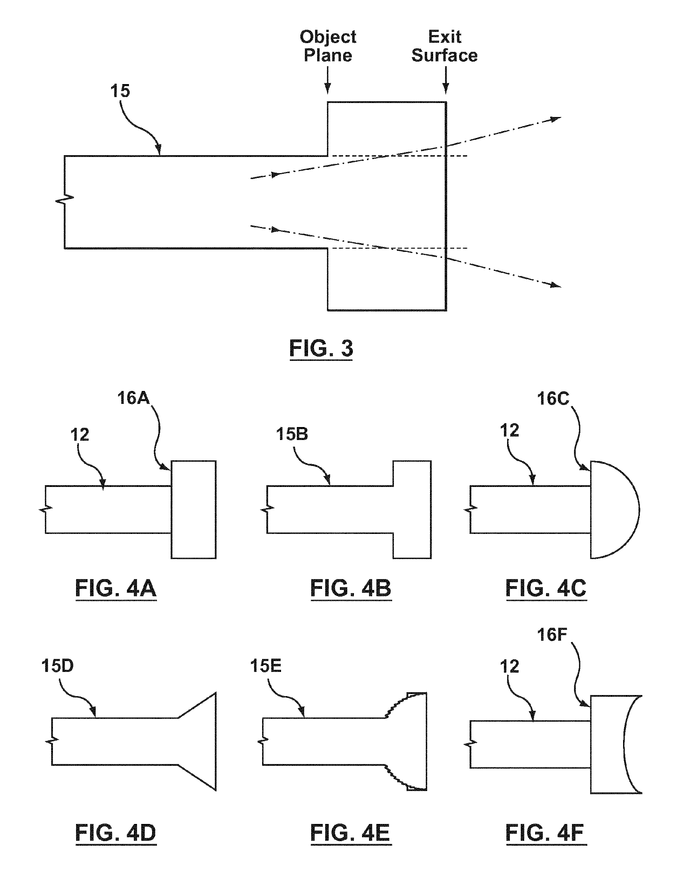

Therefore, according to one embodiment of the present invention, an integrator rod 15 is provided wherein the volume of the rod and its cross section are increased beyond the normal location of the exit face as shown in FIG. 3, so that light rays from the object (i.e. the cross sectional plane having the desired size, shape and light distribution) pass directly to the exit surface (instead of reflecting as shown in FIG. 2B).

By separating the object plane and exit surface, the integrator rod of the present invention reduces sensitivity to surface dust and defects at the exit surface, since scattering or occluding objects on the exit surface are out of focus at the DMD and screen planes. Further, glass outside the transmitting area can be contacted and used for mounting without any change in optical properties. In addition, because embedding the object in a refractive material reduces the divergence angle of light, the integrator rod of the present invention increases numerical aperture and improves light collection efficiency.

The simplest embodiment of integrator rod 15, according to the invention, comprises a glass slab 16A extending from the exit surface of a conventional integrator rod 12, as shown in FIG. 4A. Dust cannot reach the object plane of the rod because the volume is occupied by the slab 16A. Ideally, an integrator rod 15B is manufactured from a single piece of glass so that the extended volume is integral with the main body, as shown in FIG. 4B, so that only volume defects or inclusions give rise to image artifacts.

As shown in the embodiment of FIG. 4C, curvature can be applied at the exit surface of an integrator rod 12 (i.e. by replacing the flat glass slab 16A of FIG. 4A with a plano-convex lens 16C). FIG. 4F shows an embodiment with curvature applied at the exit surface by a plano-concave lens 16F extending from the object plane.

For the embodiments of FIGS. 4C and 4F, the relay lens system 13 design should ideally account for both curvature of the exit surface and the presence of glass where there is usually air.

In the embodiment of FIG. 4D, an optical integrator rod 15D is manufactured from a single piece of glass, where the extension tapers outwardly from the object plane.

Reflections from the surface of the extension may be prevented by roughing or blackening the wall surfaces between the object plane and exit surface, as in the rod 15E shown in FIG. 4E

The embodiments of FIGS. 4A - 4F can be manufactured by casting (i.e. for the solid glass embodiments of FIGS. 4B, 4D and 4E) or by vacuum bonding i.e. for the two-part embodiments of FIGS. 4A, 4C and 4F. For the latter embodiments, it should be noted that vacuum bonding provides near perfect fusion of glass pieces, but would have to take into account the operating temperature of the rod 12.

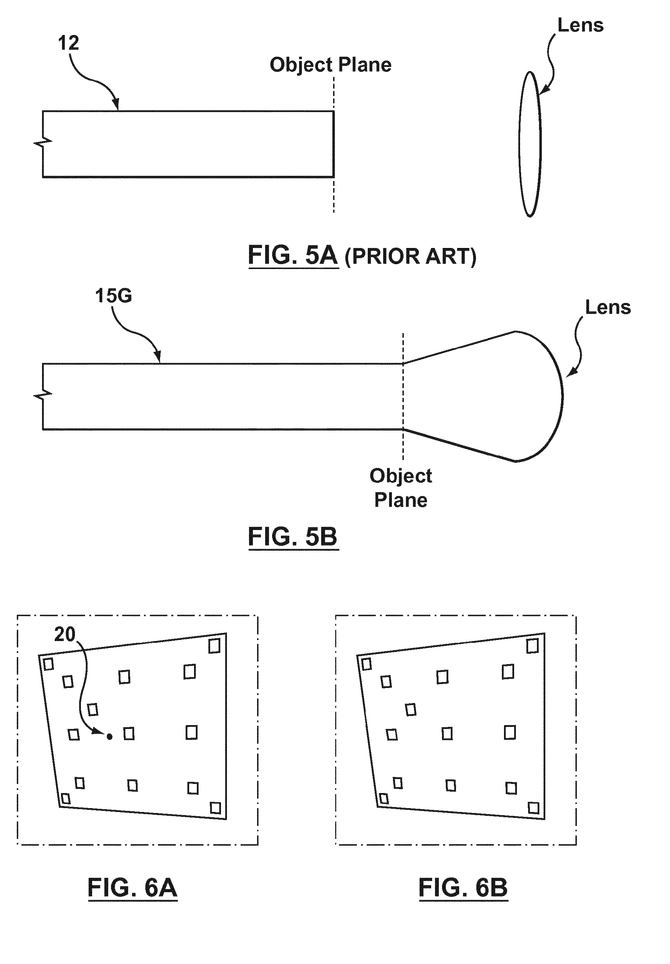

If the object and exit surfaces are well separated, exit curvature such as provided by the embodiments shown in FIGS. 4C and 4F can operate to assist the relay lens system 13. In one embodiment, the rod 12 and first optical element (i.e. lens) of relay system 13 in the conventional arrangement of FIG. 5A, can be replaced by a single piece of glass 15G, as shown in FIG. 5B, thereby eliminating one glass-to-air transition and one air-to-glass transition within the illumination system.

It has been experimentally determined that a 4mm defocus (i.e. separation between object plane and exit surface) dramatically reduces image artifacts for one typical projector design. FIG. 6A shows a baseline image produced by a projector, where a test obstruction placed at the coincident object plane and exit surface of a conventional integrator rod 12 results in a significant image artifact 20. However, when the same test obstruction is placed on the exit surface of the integrator rod 15 of the present invention, with a 4mm separation between the object plane and exit surface, the artifact virtually disappears.

The many features and advantages of the invention are apparent from the detailed specification and, thus, it is intended by the appended claims to cover all such features and advantages of the invention that fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. An integrator rod for converting an irregular pattern of light into a uniform spatial light distribution at an object plane for a lens relay system, comprising a main body having an input face for receiving said irregular pattern of light, and an exit face separated from said object plane by an extended volume having larger cross sectional area than said body in order to allow light to pass directly from said object plane to said exit face without reflection.

2. The integrator rod of claim 1, wherein said extended volume comprises a glass slab connected at said object plane to the solid body.

3. The integrator rod of claim 1, wherein said extended volume is integral with said main body.

4. The integrator rod of claim 2, wherein the exit face is curved.

5. The integrator rod of claim 4, wherein the exit face is a plano-convex lens.

6. The integrator rod of claim 4, wherein the exit face is a plano-concave lens.

7. The integrator rod of claim 3, wherein said glass slab tapers from the object plane to the exit face.

8. The integrator rod of claim 7, wherein said glass slab is roughened to prevent light reflection.

9. The integrator rod of claim 7, wherein said glass slab is blackened to absorb light reflection.

10. The integrator rod of claim 2, wherein said glass slab is vacuum bonded to said main body.

11. The integrator rod of claim 3, wherein said glass slab and main body form a single piece of glass.

12. The integrator rod of claim 3, wherein the exit face is a plano-convex lens forming part of said lens relay system.

13. The integrator rod of claim 12, wherein the object plane and exit face are separated by approximately 4 mm.
